# EUROPEAN PATENT SPECIFICATION

(11) **EP 1 446 026 B1**
(45) Date of publication and mention of the grant of the patent: **05.04.2006**
(21) Application number: 01275051.9
(22) Date of filing: 19.11.2001
(51) Int. Cl.: A23N 12/00, A23N 7/02, A23N 12/08

(54) **SYSTEM FOR SUPPORTING AND/OR DRIVING A ROTATABLE DRUM**
SYSTEM ZUM STÜTZEN UND/ODER ANTREIBEN EINER DREHBAREN TROMMEL
SYSTEME DE SUPPORT ET/OU D'ENTRAINEMENT D'UN TAMBOUR ROTATIF

(43) Date of publication of application: 18.08.2004
(73) Proprietor: Sormac B.V., 5916 PN Venlo (NL)
(72) Inventor: BACKUS, Stephanus, Michael, Marie, NL-5913 VH Venlo (NL)
(74) Representative: Bleukx, Lucas Lodewijk M.
(86) International application number: PCT/EP2001/013532
(87) International publication number: WO 2003/053173

(56) References cited:
- DE-A- 3 110 406
- DE-C- 34 868
- GB-A- 1 545 152

## Description

The invention relates to a system for supporting and driving a rotatable drum, in which as seen along the longitudinal axis of the drum it is supported by at least two separated support and driving devices.

Such a device is known from e.g. US-A-4226271.

In this known device a drum having its longitudinal axis positioned in a substantially horizontal way is supported at its underside by a number of rollers. In fact there are three sets of rollers, each set being provided on the same axis and the three axis being positioned parallel to each other in such a way that the drum is freely supported by the rollers.

As such this is a flexible end reliable way of supporting a drum, otherwise this way of supporting a drum is restricted to horizontally oriented drums as described above. Moreover the system is such that the drum is not enclosed, i.e. it is possible that the drum is lifted in such a way that it is lifted out of its support. This is especially so in case of drums which are loaded with material to be treated, in which the charge is not defined and unpredictable. In such circumstances, irregular forces can act on the drum, which can cause such lifting. It is possible to position the three rollers in such a way that the drum is really enclosed, but by doing so the flexibility of the system is radically reduced.

It is therefor an object of the invention to provide a system of the above mentioned type, in which the above mentioned problems are avoided.

This object is achieved in that each support and driving device comprises at least three belt guiding rollers positioned at a defined distance from the drum circumference and a corresponding number of belts, each belt extending around the circumference of the drum and one of said guiding rollers.

In this way a fully enclosed system has been obtained which still has a sufficient degree of flexibility.

Moreover, it is even possible to use the system in a vertically oriented drum.

Other characteristics and advantages of the invention will become clear from the following description, references being made to the annexed drawings in which,
- Fig. 1.: is a schematic representation of a peeling drum provided with a system according to the invention,
- Fig. 2: is a cross-section according to line II-II in Fig. 1,
- Fig. 3: is a perspective view of a drying drum provided with a system according to the invention, and
- Fig. 4: is a schematic cross-section view of the drying apparatus of Fig. 3.

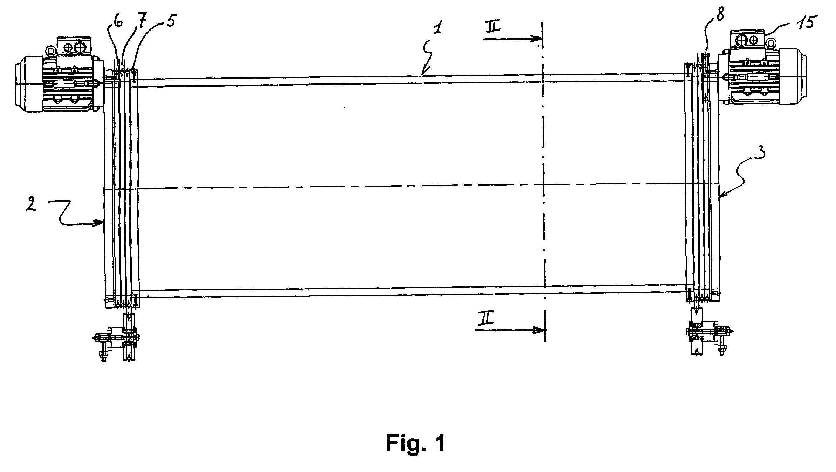

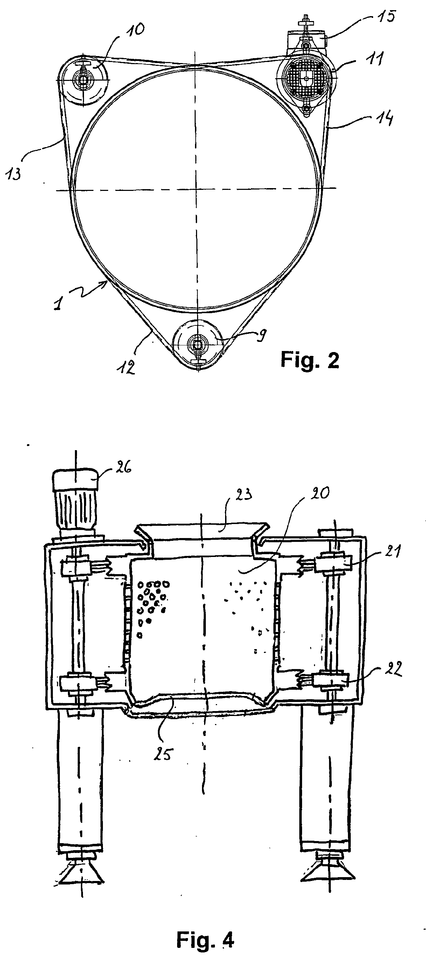

In Figs. 1 and 2 there is shown a drum 1 for peeling potatoes or the like. The drum 1 is normally positioned in a substantially horizontal way in a machine frame (not shown), which otherwise supports the drum 1 in the way described below.

The drum 1 may be conventional in that it has two open ends, one charging end 2 for introducing the potatoes to be peeled and a discharging end 3 for discharging the peeled potatoes. The peeling itself is performed by means of peeling knifes or other means provided to the inner surface of the drum.

In order to support the drum 1, each end portion of it is provided with a number of circumferential guiding rims. In the embodiment shown there are four guiding rims 5 forming in this way three guiding gutters 6, 7, 8. Positioned around the circumferences of the drum 1 and opposite each of the guiding gutters there are provided three guiding rollers 9, 10, 11, guiding roller 9 being positioned opposite gutter 6, guiding roller 10 being positioned opposite gutter 7 and guiding roller 11 being positioned opposite gutter 8.

Preferably the gutters 6, 7, 8 and the circumference of the rollers 9, 10, 11 are designed in such a way that they are adapted to accommodate a V-type belt.

The rollers 9, 10 and 11 are rotatably mounted on the frame (not shown) of the machine. In the embodiment shown roller 9 is positioned under the drum aligned with the axis thereof, whereas rollers 10 and 11 are positioned slightly above the drum with their axis on a line going through the axis of the drum and making an angle of about 45° with the vertical direction. It is, however, possible to position the rollers 9, 10 and 11 in a different way, e.g. a regular distribution along the circumference of the drum. Otherwise it is possible to have more than three rollers around the circumference of the drum.

In the embodiment shown, V-type belts 12, 13, 14 are extending over gutter 6 and roller 9, gutter 7 and roller 10 and gutter 8 and roller 11 respectively. As a result of the relative position of the rollers 9, 10 and 11 and by applying the right tension to the belts 12, 13 and 14 a reliable and flexible support of the drum end can be obtained, which allows a reliable operation of the machinery in which the drum is used.

Preferably one of the rollers in the embodiment shown roller 11 is connected to the shaft of a motor 15 whereby this roller 11 can be rotatably driven. In this way also the drum may be rotatably driven through belt 14, roller 11 and motor 15.

The other end portion of the drum 1 may be supported in the same way by a device which corresponds to the system described above.

In the embodiment shown and described above the drum is in a so-called horizontal position, i.e. its axis is positioned horizontally. In this position the drum is more or less partly hanging in a number of belts and is partly kept in place against vibrations by another number of belts. In the embodiment shown in Figs. 1 and 2, the drum is hanging in belts 10 and 11 and is kept downwardly by belt 9.

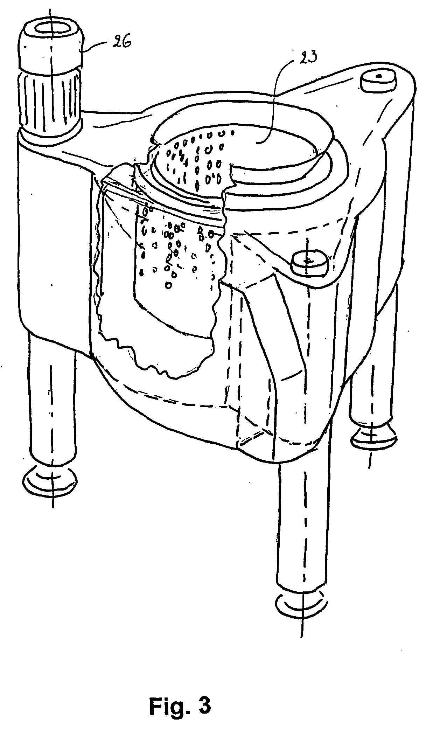

In the Figs. 3 and 4 there is shown a system for supporting a drum 20 in a so-called vertical position, i.e. the longitudinal axis of the drum 20 is positioned in a vertical way. The apparatus shown may be a centrifugal dryer such as for instance described in NL-A-1015991.

The drum 20 is provided with two supporting devices 21 and 22 as described above with respect to Figs. 1 and 2, one near its upper end 23 and one near its lower or bottom end 25. As a result of V-shaped belts and an appropriate belt tension the drum 20 can be supported in a flexible way.

In case of a dryer the product to be dried such as lettuce is introduced through the upper end 23 dried during a defined time by rotation of the drums and discharged through the upper end 23. The drum itself may be driven by a motor 26 acting through one of the roller/belt combinations and its speed may be sufficiently high in order to have the required centrifugal force for drying the products.

## Claims

1. System for supporting and driving a rotatable drum, comprising at least two separated support and driving devices a seen along the longitudinal axis of the drum **characterized in that**, each support and driving device comprises at least three belt guiding rollers positioned at a defined distance from the drum circumferences and corresponding number of belts, each belt extending around the circumference of the drum and one of said guiding rollers.

2. System according to claim 1, **characterized in that** the rollers are positioned at regular intervals as seen along the circumferences of the drum.

3. System according to claim 1 or 2, **characterized in that** the belts are V-shaped belts and the circumference of the drum is provided with corresponding guiding rims.

## Patentansprüche

1. System zum Abstützen und Antreiben einer Drehtrommel, umfassend mindestens zwei getrennte Abstütz- und Antriebsgeräte, wenn mit Blick auf die Längsachse der Trommel betrachtet, **dadurch gekennzeichnet, dass** jedes Abstütz- und Antriebsgerät mindestens drei Riemenführungsrollen, die in einem definierten Abstand von den Trommelumfängen positioniert sind, und eine entsprechende Anzahl von Riemen umfasst, wobei sich jeder Riemen um den Umfang der Trommel und um eine der Führungsrollen erstreckt.

2. System nach Anspruch 1, **dadurch gekennzeichnet, dass** die Rollen, wenn entlang der Umfänge der Trommel betrachtet, in regelmäßigen Abständen positioniert sind.

3. System nach Anspruch 1 oder 2, **dadurch gekennzeichnet, dass** als Riemen Keilriemen benutzt werden, und der Umfang der Trommel mit entsprechenden Führungenuten versehen ist.

## Revendications

1. Système de support et d'entraînement d'un tambour rotatif, comprenant, vu selon l'axe longitudinal du tambour, au moins deux dispositifs de support et d'entraînement séparés, **caractérisé en ce que** chaque dispositif de support et d'entraînement comporte au moins trois galets de guidage de courroie positionnés à une distance définie de la circonférence du tambour et un nombre correspondant de courroies, chaque courroie s'étendant autour de la circonférence du tambour et de l'un des trois dits galets de guidage.

2. Système selon la revendication 1, **caractérisé en ce que**, vu sur la circonférence du tambour, les galets sont positionnés à intervalles réguliers.

3. Système selon la revendication 1 ou 2, **caractérisé en ce que** les courroies sont des courroies trapézoidales et **en ce que** la circonférence du tambour est pourvue de jantes de guidage correspondantes.
